# FASCICULE DE BREVET EUROPEEN

(11) **EP 3 066 330 B1**
(45) Date de publication et mention de la délivrance du brevet: **08.05.2019**
(21) Numéro de dépôt: 14809465.9
(22) Date de dépôt: 05.11.2014
(51) Int. Cl.: F02K 9/48, F02K 9/50, F02K 9/64, F02K 9/97

(54) **ENSEMBLE PROPULSIF ET PROCÉDÉ D'ALIMENTATION EN ERGOLS**
ANTRIEBSANORDNUNG UND VERFAHREN ZUR ZUFUHR VON TREIBMITTELN
PROPULSION ASSEMBLY AND METHOD FOR SUPPLYING PROPELLANTS

(30) Priorité: 06.11.2013 FR 1360849
(43) Date de publication de la demande: 14.09.2016
(73) Titulaire: ArianeGroup SAS, 75015 Paris (FR)
(72) Inventeur: DANGUY, François, F-27510 Tourny (FR); HAYOUN, David, F-75116 Paris (FR); SANNINO, Jean Michel, F-27950 Saint-Marcel (FR)
(74) Mandataire: Calvo de Nó, Rodrigo
(86) Numéro de dépôt international: PCT/FR2014/052820
(87) Numéro de publication internationale: WO 2015/067894

(56) Documents cités:
- FR-A1- 2 531 141
- US-A- 3 516 251
- US-A- 5 267 437
- US-A1- 2012 131 903
- US-B1- 8 572 948

## Description

La présente invention concerne le domaine des moteurs-fusées à ergols liquides. Comme moteur-fusée à ergols liquides on entend, dans le présent contexte, un ensemble propulsif comprenant un premier réservoir, apte à contenir un premier ergol liquide, un deuxième réservoir, apte à contenir un deuxième ergol liquide, ainsi qu'une chambre propulsive, apte à générer une poussée par la combustion et détente d'un mélange desdits ergols.

Afin de maximiser la poussée produite par un tel ensemble propulsif, il convient d'augmenter, dans la mesure du possible, la pression régnant à l'intérieur de la chambre propulsive. Afin de pouvoir continuer à alimenter la chambre propulsive malgré ces hautes pressions, les ergols doivent être introduits à des pressions encore plus élevées. Pour cela, différents moyens sont connus dans l'état de la technique.

Un premier moyen qui a été proposé est la pressurisation des réservoirs contenant les ergols. Toutefois, cette approche restreint fortement la pression maximale pouvant être atteinte dans la chambre propulsive, et donc l'impulsion spécifique du moteur à réaction. En conséquence, pour atteindre des impulsions spécifiques plus élevées, l'utilisation de pompes d'alimentation est devenue courante. Différents moyens ont été proposés pour actionner ces pompes, dont le plus courant est leur entraînement par au moins une turbine. Dans une telle turbopompe, la turbine, à son tour, peut être actionnée de plusieurs manières différentes. Par exemple, la turbine peut être actionnée par des gaz de combustion produits par un générateur de gaz. Toutefois, dans les moteurs-fusées dits à cycle « expander », la turbine est actionnée par l'un des ergols après son passage par un échangeur de chaleur dans lequel il a été chauffé par de la chaleur produite dans la chambre propulsive. Ainsi, ce transfert de chaleur peut contribuer simultanément à refroidir les parois de la chambre propulsive et à actionner l'au moins une pompe d'alimentation.

Même si les moteurs-fusées à cycle « expander » peuvent être techniquement plus simples que ceux comprenant un générateur de gaz, ils restent néanmoins relativement complexes, ce qui accroit le coût et le risque de défaillance comparativement aux moteurs-fusées assurant l'alimentation de la chambre propulsive en ergols par simple pressurisation des réservoirs. En particulier, quand les ergols ont des densités différentes, ceci peut empêcher l'utilisation de pompes tournant au même régime pour les différents ergols. En conséquence, il devient nécessaire d'utiliser des turbopompes séparées pour les différents ergols, ou au moins des pompes avec des arbres pouvant tourner à des vitesses différentes.

Les documents US2012/131903 et FR2531141 divulguent des ensembles propulsifs connus dans l'art antérieur.

### Objet et résumé de l'invention

La présente invention vise à remédier à ces inconvénients. En particulier, la présente divulgation vise à proposer un ensemble propulsif qui permette d'atteindre une impulsion spécifique élevée avec des systèmes d'alimentation en ergols comparativement simples et légers. Dans au moins un mode de réalisation, cet ensemble propulsif comprend un premier réservoir, un deuxième réservoir et une chambre propulsive, le premier réservoir étant apte à contenir un premier ergol liquide, le deuxième réservoir étant apte à contenir un deuxième ergol, et la chambre propulsive étant apte à générer une poussée par la combustion et détente d'un mélange desdits ergols. En outre, cet ensemble propulsif comprend aussi un premier et un deuxième circuit d'alimentation, reliant respectivement le premier et le deuxième réservoir à la chambre propulsive pour alimenter cette dernière avec les ergols. Le premier circuit d'ergol comprend un échangeur de chaleur régénératif arrangé de manière à chauffer ledit premier ergol avec de la chaleur provenant de la chambre propulsive, et l'ensemble propulsif comprend aussi une turbopompe, comprenant une turbine, une première pompe et une deuxième pompe. Ladite première pompe est traversée par le premier circuit d'alimentation en amont dudit échangeur de chaleur régénératif, ladite deuxième pompe est traversée par le deuxième circuit d'alimentation, et ladite turbine est traversée par le premier circuit d'alimentation en aval dudit échangeur de chaleur régénératif. Cet ensemble propulsif est donc un moteur-fusée à cycle « expander », dans lequel la turbopompe est actionnée par la détente du premier ergol réchauffé par son passage à travers l'échangeur de chaleur.

Dans au moins ce mode de réalisation, le but susmentionné est atteint grâce à ce que le deuxième réservoir est apte à contenir un deuxième ergol, l'ensemble propulsif comprenant aussi un dispositif de pressurisation configuré pour maintenir une pression sensiblement plus élevée dans le deuxième réservoir que dans le premier réservoir, et à ce que la turbopompe est une turbopompe monoarbre, dans laquelle la première et la deuxième pompe sont reliées à la turbine par un seul arbre rotatif. En particulier, le dispositif de pressurisation peut être configuré pour maintenir, dans le deuxième réservoir, une pression d'au moins 2 MPa, et en particulier d'au moins 3 MPa. La pressurisation du deuxième réservoir permet l'utilisation d'une turbopompe monoarbre dans laquelle la première et la deuxième pompe tournent au même régime, même si le deuxième ergol présente une masse volumique sensiblement supérieure à celle du premier ergol, puisque la deuxième pompe est gavée par la pression interne du deuxième réservoir, réduisant ainsi la puissance à fournir à travers cette deuxième pompe.

La turbine peut être traversée par le premier circuit d'alimentation entre ledit échangeur de chaleur régénératif et ladite chambre propulsive. Ainsi, en fonctionnement, le premier ergol est injecté dans la chambre propulsive après une détente partielle dans la turbine.

Alternativement, toutefois, ladite turbine peut être traversée par une branche de dérivation du premier circuit d'alimentation en aval d'au moins une partie dudit échangeur de chaleur régénératif, ladite branche de dérivation ne débouchant pas dans la chambre propulsive. Ainsi, dans cette autre variante, seulement une partie du débit du premier ergol est utilisée pour actionner la turbine. Toutefois, comme la branche de dérivation ne débouche pas dans la chambre propulsive, la détente de ce débit dérivé dans la turbine peut être plus complète, permettant ainsi d'obtenir sensiblement la même puissance que si l'ensemble du débit du premier ergol était utilisé.

Afin notamment de faciliter une alimentation axiale des deux pompes, ce qui est bénéfique pour leur rendement, la turbine peut être placée entre la première pompe et la deuxième pompe. En particulier, la première pompe et la deuxième pompe peuvent être placées en porte-à-faux par rapport à des paliers soutenant l'arbre rotatif.

Afin notamment de limiter l'encombrement de la turbine et faciliter son intégration avec les deux pompes, ladite turbine peut en particulier être une turbine axiale. D'autre part, afin de maximiser le rendement des pompes, au moins une desdites première et deuxième pompes peut être une pompe centrifuge.

L'utilisation de matériaux avancés pour la structure du deuxième réservoir permet de minimiser la masse supplémentaire requise pour résister à sa pression interne. En particulier, ledit deuxième réservoir peut être au moins partiellement en matériau composite, et plus particulièrement comprendre une structure composite bobinée. Dans le présent contexte, on comprend comme matériau composite un matériau avec deux composants distincts en non miscibles. Plus particulièrement, on peut se référer à un matériau composite à matrice organique renforcée par fibres, lequel comprend des fibres telles que des fibres de verre, des fibres de carbone, et/ou des fibres organiques, noyées dans une matrice organique, généralement polymérique. Typiquement, une structure composite bobinée est une structure creuse crée par bobinage de telles fibres, imprégnées de résine thermodurcissable, ou d'un thermoplastique en état liquide, autour d'un noyau solide, qui est lui-même creux ou apte à être détruit ou extrait de la structure composite bobinée après le bobinage des fibres imprégnées et la solidification de la matrice.

Afin d'obtenir une densité énergétique élevée des ergols, au moins un desdits ergols liquides peut être un ergol cryogénique. On entend par « ergol cryogénique », dans le présent contexte, un ergol maintenu liquide à une température inférieure à 120 K. En particulier, ledit premier ergol liquide peut être de l'hydrogène liquide et ledit deuxième ergol liquide peut être de l'oxygène liquide.

La présente divulgation se rapporte aussi à un engin spatial comprenant l'ensemble propulsif susmentionné. Dans ce contexte, on entend « engin spatial » au sens large, comprenant aussi, par exemple, des lanceurs spatiaux ainsi que des étages individuels de ceux-ci.

Finalement, la présente divulgation se rapporte également à un procédé d'alimentation en ergols liquides d'une chambre propulsif d'un ensemble propulsif, dans lequel un débit d'un premier ergol liquide est extrait d'un premier réservoir, à travers un premier circuit d'alimentation, dans lequel il est d'abord pompé par une première pompe d'une turbopompe monoarbre, chauffé, dans un échangeur de chaleur régénératif, avec de la chaleur provenant de la chambre propulsive, et ensuite détendu dans une turbine de ladite turbopompe monoarbre pour actionner ladite première pompe et une deuxième pompe de la turbopompe monoarbre à travers un seul arbre rotatif reliant la turbine aux deux pompes de la turbopompe monoarbre, et un débit d'un deuxième ergol liquide est extrait d'un deuxième réservoir dans lequel le deuxième ergol liquide est maintenu par un dispositif de pressurisation à une pression sensiblement plus élevée que le premier ergol liquide dans le premier réservoir, et traverse un deuxième circuit d'alimentation, dans lequel il pompé par ladite deuxième pompe avant d'être injecté dans la chambre propulsive.

Dans ce procédé, selon deux alternatives différentes, l'ensemble dudit débit du premier ergol liquide peut être détendu dans ladite turbine avant d'être injecté dans la chambre propulsive, ou une première partie dudit débit du premier ergol liquide peut être dérivée à travers une branche de dérivation du premier circuit d'alimentation en aval d'au moins une partie dudit échangeur de chaleur régénératif pour être détendue dans ladite turbine, tandis qu'une deuxième partie dudit débit du premier ergol liquide est injectée dans la chambre propulsive.

### Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :
- la figure 1 illustre schématiquement un lanceur spatial multi-étages ;
- la figure 2 illustre schématiquement un ensemble propulsif suivant un premier mode de réalisation de l'invention ; et
- la figure 3 illustre schématiquement un ensemble propulsif suivant un deuxième mode de réalisation de l'invention.

### Description détaillée de l'invention

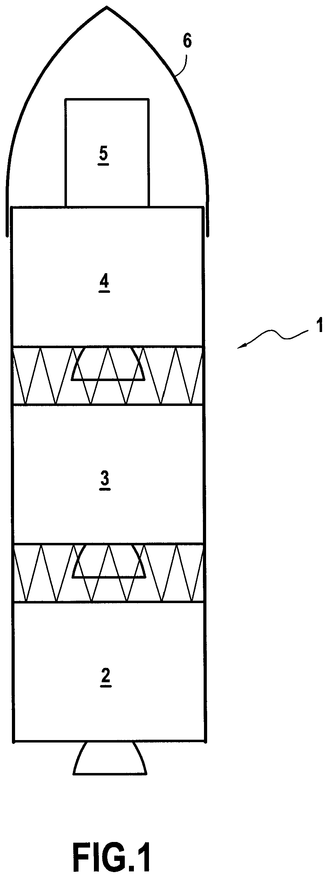

Un lanceur spatial multi-étages 1 est illustré schématiquement sur la figure 1. Le lanceur 1 illustré comprend trois étages successifs 2,3,4, et une charge utile 5, comme par exemple un satellite, sous une coiffe 6 fixée de manière libérable sur le dernier des trois étages. Chacun des trois étages 2,3,4 comprend un ensemble propulsif de type moteur-fusée, permettant ainsi le lancement et mise en orbite de la charge utile 5. Pour cela, les ensembles propulsifs des trois étages 2,3,4 sont mis à feu successivement, avec séparation de chaque étage épuisé avant la mise à feu de l'ensemble propulsif de l'étage suivant.

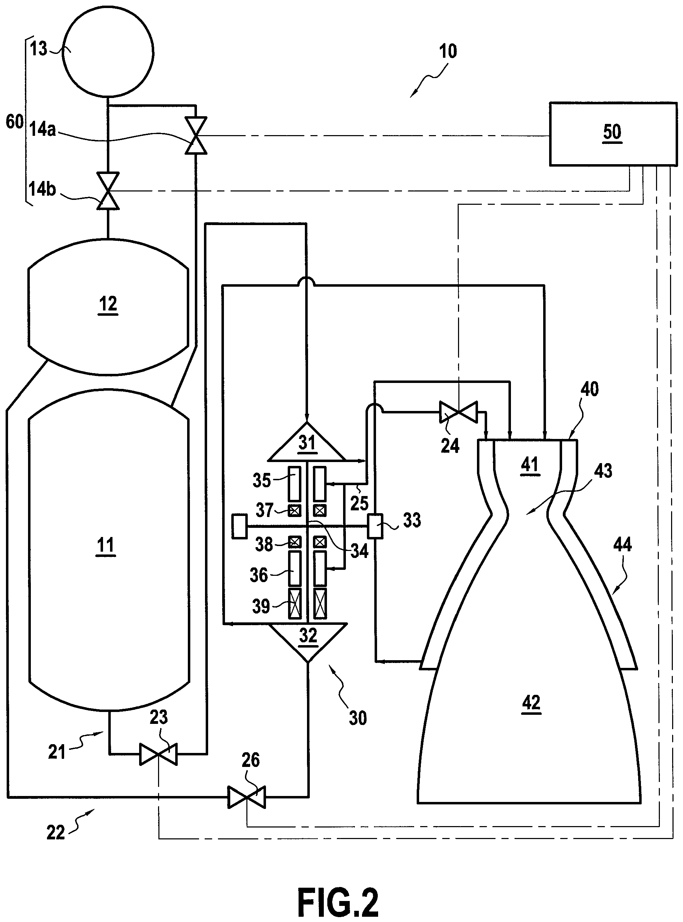

La figure 2 illustre un ensemble propulsif 10 suivant un premier mode de réalisation. Cet ensemble propulsif 10 pourrait équiper l'un quelconque des étages d'un tel lanceur spatial, ou même un engin spatial lancé comme charge utile sur un tel lanceur spatial. L'ensemble propulsif 10 illustré est un moteur-fusée de cycle « expander », c'est-à-dire, un moteur-fusée à ergols liquides et alimentation par turbopompe, dans lequel la turbopompe est actionnée par détente d'un des ergols après son réchauffage et sa vaporisation dans un échangeur de chaleur régénératif chauffé par la chambre propulsive.

L'ensemble propulsif 10 illustré comprend un premier réservoir 11, un deuxième réservoir 12, un troisième réservoir 13, un premier circuit d'alimentation 21, un deuxième circuit d'alimentation 22, une turbopompe 30, et une chambre propulsive 40. Le premier réservoir 11 est apte à contenir un premier ergol liquide cryogénique tel que, par exemple, de l'hydrogène liquide (LH₂), à une pression interne p₁₁ pouvant être proche de la pression atmosphérique standard (environ 0,1 MPa). Le deuxième réservoir 12, pour sa part, est apte à contenir un deuxième ergol liquide cryogénique, sensiblement plus dense que le premier ergol, tel que, par exemple, de l'oxygène liquide (LOX), à une pression interne p₁₂ sensiblement plus élevée que la pression interne p₁₁ du premier réservoir 11. Par exemple, cette pression p₁₂ peut être d'au moins 2 MPa, voire d'au moins 3 MPa. Afin de maintenir ces pressions p₁₁ et p₁₂ dans, respectivement, le premier réservoir 11 et le deuxième réservoir 12, l'ensemble propulsif 10 comprend aussi un dispositif de pressurisation 60 comprenant un troisième réservoir 13 connecté au premier réservoir 11 à travers une vanne 14a et au deuxième réservoir 12 à travers une autre vanne 14b. Ce troisième réservoir 13 est apte à contenir un fluide de pressurisation, tel que par exemple de l'hélium gazeux. En conséquence, le troisième réservoir 13 est apte à résister une pression interne p₁₃ encore plus élevée que la pression p₁₂ du deuxième réservoir 12.

Afin de permettre la pressurisation du deuxième réservoir 12 à la pression p₁₂ sans encourir une pénalité de masse rédhibitoire, ce deuxième réservoir peut être en matériau composite. Plus spécifiquement, il peut avoir une structure en composite bobinée. Les mêmes moyens peuvent également être mis en oeuvre pour le troisième réservoir 13.

Bien que, dans les modes de réalisation illustrés, le dispositif de pressurisation 60 comprenne un seul réservoir 13, et que le même fluide de pressurisation soit donc utilisé pour le premier réservoir 11 et pour le deuxième réservoir 12, il est également envisageable que le dispositif de pressurisation 60 comprenne deux réservoirs séparés, un pour chacun des deux réservoirs d'ergols 11 et 12. Ainsi, un fluide de pressurisation différent pourrait être utilisé pour chacun de ces deux réservoirs d'ergols 11 et 12. En outre, alternativement ou en complément à l'au moins un réservoir de fluide de pressurisation, le dispositif de pressurisation 60 peut comprendre aussi, pour chacun des réservoirs d'ergols 11 et 12, des moyens de pressurisation autogène (non illustrés) utilisant le propre ergol contenu dans ce réservoir 11,12, après réchauffement et passage à l'état gazeux, pour y maintenir la pression p₁₁, p₁₂. Une telle pressurisation autogène, au moins pendant les intervalles de fonctionnement de l'ensemble propulsif 10, permet de réduire les besoins en fluide de pressurisation, et donc la taille du ou des réservoirs de fluide de pressurisation.

La turbopompe 30 est une turbopompe monoarbre avec une première pompe 31, une deuxième pompe 32 et une turbine 33 reliées mécaniquement par un seul arbre rotatif commun 34. La turbine 33, qui est une turbine axiale, est placée entre les deux pompes 31, 32. La pompe 31 est une pompe centrifuge, tandis que la pompe 32 peut être une pompe axiale. La vitesse de rotation est optimisée pour la pompe 31 et la turbine 33, ce qui est compatible avec une pompe 32 axiale et permet une grande compacité de la turbopompe 30 compacte du fait de la vitesse de rotation élevée. Les pompes 31, 32 sont placées en porte-à-faux par rapport à des paliers 35, 36 soutenant l'arbre rotatif 34. Avec une turbine 33 de diamètre supérieur aux pompes 31,32, et/ou des admissions axiales des pompes 31,32 orientées vers l'extérieur par rapport à la turbine 33, il est possible de minimiser l'encombrement de cette turbopompe 30, facilitant ainsi son intégration dans l'ensemble propulsif 10. Des joints d'étanchéité 37,38 autour de l'arbre rotatif 34 séparent la turbine 33 des deux paliers 35, 36. Une autre barrière 39 à très grande étanchéité est interposée entre le palier et la deuxième pompe 32, de manière à éviter le contact entre le premier et le deuxième ergol dans la turbopompe 30.

La chambre propulsive 40 comprend une chambre de combustion 41, pour la combustion d'un mélange des deux ergols, et une tuyère convergente-divergente 42 avec un goulot d'étranglement 43 pour la détente et accélération supersonique des gaz de combustion résultants afin de générer une poussée en direction opposée.

Le premier circuit d'alimentation 21 relie le premier réservoir 11 à la chambre propulsive 40 en passant par la première pompe 31, un échangeur de chaleur régénératif 44 et la turbine 33. Ce premier circuit d'alimentation 21 comprend aussi au moins deux vannes 23,24 situées, respectivement, entre le premier réservoir 11 et la première pompe 31 et entre la première pompe 31 et l'échangeur de chaleur 44. L'échangeur de chaleur 44, destiné à transmettre de la chaleur de la chambre propulsive 40 à l'ergol traversant le premier circuit 21, peut être intégré dans une paroi externe de la chambre propulsive 40, en particulier autour de la chambre de combustion 41 et de son goulot d'étranglement 43. De cette manière, l'échangeur 44 permet non seulement de chauffer l'ergol, mais aussi de refroidir cette paroi externe, permettant ainsi d'atteindre, dans la chambre propulsive 40, des températures particulièrement élevées sans risque d'endommager sa paroi externe. Une petite dérivation 25 du circuit 21 directement en aval de la première pompe 21 est reliée aux paliers 35, 36, afin de les lubrifier avec le premier ergol.

Le deuxième circuit d'alimentation 22 relie le deuxième réservoir 12 à la chambre propulsive 40 en passant par la deuxième pompe 32. Ce deuxième circuit d'alimentation comprend aussi au moins une vanne 26 située entre le deuxième réservoir 12 et la deuxième pompe 32.

Afin de commander le fonctionnement de l'ensemble propulsif 10, les vannes 14a,14b,23,24,26 sont connectées à une unité de commande 50 pour leur pilotage. L'ensemble propulsif peut notamment aussi comprendre des capteurs (non illustrés) également connectés à l'unité de commande 50 afin d'obtenir un retour sur le fonctionnement de l'ensemble propulsif 10.

En fonctionnement, après la mise en froid des circuits d'alimentation 21, 22 et de la turbopompe 30, et après l'arrivée initiale des ergols à la chambre propulsive 40 et leur allumage, le premier ergol circulant du premier réservoir 11 vers la chambre propulsive 40 est chauffé, en traversant l'échangeur de chaleur 44, par la chaleur produite par la combustion des ergols dans la chambre propulsive 40. L'ergol ainsi réchauffé peut passer de l'état liquide à l'état gazeux avant son arrivée à la turbine 33, dans laquelle sa détente partielle permet d'actionner les deux pompes 31,32 à travers l'arbre rotatif 34. Cette détente est uniquement partielle, de telle manière que la pression restante du premier ergol en aval de la turbine 33 reste suffisante pour permettre l'injection du premier ergol dans la chambre propulsive 40. La première pompe 31 maintient ainsi l'alimentation de la chambre propulsive 40 avec le premier ergol, qui continue à être extrait du premier réservoir 11 en amont de cette première pompe 31. Quant au deuxième ergol, la pression interne p₁₂ du deuxième réservoir 12, maintenue grâce au fluide de pressurisation contenu dans le troisième réservoir, permet de gaver la deuxième pompe 32, réduisant ainsi proportionnellement la puissance de pompage requise de cette deuxième pompe 32 pour continuer à assurer l'alimentation de la chambre propulsive 40 avec ce deuxième ergol. Ainsi, malgré la masse volumique plus élevée du deuxième ergol par rapport au premier ergol, les deux pompes 31, 32 peuvent tourner au même régime, et donc être actionnées par une turbine commune 33 à travers un arbre rotatif commun 34.

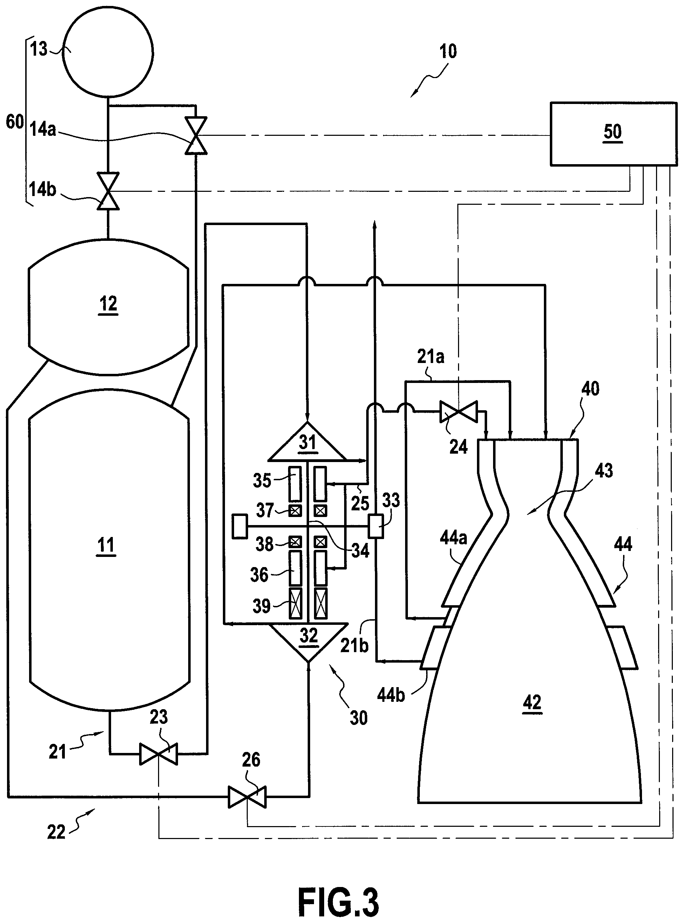

Quoique, dans le premier mode de réalisation susmentionnée, le débit principal de premier ergol est soumis à une détente partielle dans la turbine avant son injection dans la chambre propulsive, il est également possible d'actionner cette turbine par un débit dérivé, en particulier si on procède à une détente plus complète dans la turbine, renonçant à injecter après ce débit dérivé dans la chambre propulsive. Ainsi, dans un deuxième mode de réalisation, illustré sur la figure 3, l'échangeur de chaleur régénératif 44 comprend deux segments 44a,44b, et le premier circuit d'alimentation 21 comprend une branche de dérivation 21b, en aval du premier segment 44a de l'échangeur de chaleur 44, qui traverse le deuxième segment 44b de l'échangeur de chaleur 44 et la turbine 33 et ne débouche pas dans la chambre propulsive 40, contrairement à une branche principale 21a qui débouche bien dans la chambre propulsive. Les reste des éléments de cet ensemble propulsif 10 sont analogues à ceux du premier mode de réalisation et reçoivent en conséquence les mêmes chiffres de référence.

En fonctionnement, dans ce deuxième mode de réalisation, un débit principal du premier ergol est injecté dans la chambre propulsive 40 à travers la branche principale 21a du premier circuit d'alimentation 21 après son passage à travers le premier segment 44a de l'échangeur de chaleur 44, dans lequel il est réchauffé. Toutefois, un débit secondaire du premier ergol est dérivé à travers la branche de dérivation 21b, et traverse le deuxième segment 44b de l'échangeur de chaleur 44, dans lequel il est surchauffé, avant de traverser la turbine 33, laquelle actionne les pompes 31,32 grâce à la détente de ce débit secondaire au sein de la turbine 33. Après sa détente, le débit secondaire n'est plus injecté dans la chambre propulsive 40, sa pression n'étant plus suffisante pour cela, mais peut, par exemple, être expulsé à l'extérieur par une tuyère secondaire (non illustrée).

Comparativement, toutefois, l'ensemble propulsif du premier mode de réalisation pourrait d'obtenir une impulsion spécifique plus élevée (possiblement au moins 10 s plus élevée si les ergols sont de l'hydrogène et de l'oxygène liquides) que celui du deuxième mode de réalisation. En outre, la pression de combustion peut être moins élevée dans le premier mode de réalisation, passant ainsi par exemple de 7,5 Mpa à 5,5 MPa, ce qui réduit aussi la surpression devant être fournie par la deuxième pompe. Même si dans le premier mode de réalisation la surpression devant être fournie par la première pompe est comparativement plus élevée, puisque devant permettre la subséquente détente partielle du premier ergol avant son injection, elle reste potentiellement compatible avec les performances d'une pompe centrifuge à un seul étage, grâce à la moindre pression de combustion.

En tout cas, les deux modes de réalisation illustrés permettent de réduire la pression dans le deuxième réservoir, par rapport à un ensemble propulsif comparable dans lequel la turbopompe servirait exclusivement à pomper le premier ergol, et l'injection du deuxième ergol dans la chambre de propulsion était uniquement assurée par la pressurisation de ce deuxième réservoir. D'autre part, leur avantage par rapport à un ensemble propulsif comparable dans lequel les réservoirs du premier et du deuxième ergol seraient maintenus à des pressions similaires et l'alimentation serait assurée par deux turbopompes séparées est celui de permettre une plus grande simplicité des éléments mobiles, puisque dans les deux modes de réalisation illustrés une simple turbopompe monoarbre sert à pomper les deux ergols.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Ensemble propulsif (10) comprenant au moins :
un premier réservoir (11), apte à contenir un premier ergol liquide ;
un deuxième réservoir (12), apte à contenir un deuxième ergol liquide ;
un dispositif de pressurisation (60) configuré pour maintenir une pression sensiblement plus élevée dans le deuxième réservoir (12) que dans le premier réservoir (11) ;
une chambre propulsive (40), apte à générer une poussée par la combustion et détente d'un mélange desdits ergols ;
un premier circuit d'alimentation (21), reliant le premier réservoir (11) à la chambre propulsive (40) pour alimenter cette dernière avec le premier ergol, et comprenant un échangeur de chaleur régénératif (44) arrangé de manière à chauffer ledit premier ergol avec de la chaleur provenant de la chambre propulsive (40) ;
un deuxième circuit d'alimentation (22), reliant le deuxième réservoir (12) à la chambre propulsive (40) pour alimenter cette dernière avec le deuxième ergol ; et
une turbopompe monoarbre (30), comprenant une turbine (33), une première pompe (31) et une deuxième pompe (32), lesdites pompes (31,32) étant mécaniquement reliées par un seul arbre rotatif (34) à ladite turbine (33) pour leur actionnement, ladite première pompe (31) étant traversée par le premier circuit d'alimentation (21) en amont dudit échangeur de chaleur régénératif (44), ladite deuxième pompe (32) étant traversée par le deuxième circuit d'alimentation (22), et ladite turbine (33) étant traversée par le premier circuit d'alimentation (21) en aval dudit échangeur de chaleur régénératif (44).

2. Ensemble propulsif (10) suivant la première revendication, dans lequel ladite turbine (33) est traversée par le premier circuit d'alimentation (21) entre ledit échangeur de chaleur régénératif (44) et ladite chambre propulsive (40).

3. Ensemble propulsif (10) suivant la première revendication, dans lequel ladite turbine (33) est traversée par une branche de dérivation (21b) du premier circuit d'alimentation (21) en aval d'au moins une partie dudit échangeur de chaleur régénératif (44), ladite branche de dérivation (21b) ne débouchant pas dans la chambre propulsive (40).

4. Ensemble propulsif (10) suivant l'une quelconque des revendications précédentes, dans lequel le premier réservoir (11) est apte à maintenir une pression interne d'au moins 2 MPa, et en particulier d'au moins 3 MPa.

5. Ensemble propulsif (10) suivant l'une quelconque des revendications précédentes, dans lequel la turbine (33) est placée entre la première pompe (31) et la deuxième pompe (32).

6. Ensemble propulsif (10) suivant la revendication 5, dans lequel la première pompe (31) et la deuxième pompe (32) sont placées en porte-à-faux par rapport à des paliers (35, 36) soutenant l'arbre rotatif (34).

7. Ensemble propulsif (10) suivant l'une quelconque des revendications précédentes, dans lequel ladite turbine (33) est une turbine axiale.

8. Ensemble propulsif (10) suivant l'une quelconque des revendications précédentes, dans lequel la première pompe (31) est une pompe centrifuge et la deuxième pompe (32) est une pompe axiale.

9. Ensemble propulsif (10) suivant l'une quelconque des revendications précédentes, dans lequel ledit deuxième réservoir (12) est au moins partiellement en matériau composite.

10. Ensemble propulsif (10) suivant la revendication 9, dans lequel ledit deuxième réservoir (12) comprend une structure composite bobinée.

11. Ensemble propulsif (10) suivant l'une quelconque des revendications précédentes, dans lequel au moins un desdits ergols liquides est un ergol cryogénique.

12. Ensemble propulsif (10) suivant la revendication 11, dans lequel ledit premier ergol liquide est de l'hydrogène liquide.

13. Ensemble propulsif (10) suivant l'une quelconque des revendications 11 ou 12, dans lequel ledit deuxième ergol liquide est de l'oxygène liquide.

14. Engin spatial (1) comprenant un ensemble propulsif (10) suivant l'une quelconque des revendications précédentes.

15. Procédé d'alimentation en ergols liquides d'une chambre propulsif (40) d'un ensemble propulsif, dans lequel :
un débit d'un premier ergol liquide est extrait d'un premier réservoir (11), à travers un premier circuit d'alimentation (21), dans lequel il est d'abord pompé par une première pompe (31) d'une turbopompe monoarbre (30), chauffé, dans un échangeur de chaleur régénératif (44), avec de la chaleur provenant de la chambre propulsive (40), et ensuite détendu dans une turbine (33) de ladite turbopompe monoarbre (30) pour actionner ladite première pompe (31) et une deuxième pompe (32) de la turbopompe monoarbre (30) à travers un seul arbre rotatif (34) reliant la turbine (33) aux deux pompes (31,32) de la turbopompe monoarbre (30) ;
un débit d'un deuxième ergol liquide est extrait d'un deuxième réservoir (12) dans lequel le deuxième ergol liquide est maintenu par un dispositif de pressurisation (60) à une pression sensiblement plus élevée que le premier ergol liquide dans le premier réservoir (11), et traverse un deuxième circuit d'alimentation (22), dans lequel il est pompé par ladite deuxième pompe (32) avant d'être injecté dans la chambre propulsive (40).

16. Procédé d'alimentation suivant la revendication 15, dans lequel le premier ergol liquide est injecté dans la chambre propulsive (40) après sa détente partielle dans la turbine (33).

17. Procédé d'alimentation suivant la revendication 15, dans lequel une première partie dudit débit du premier ergol liquide est dérivée à travers une branche de dérivation (21b) du premier circuit d'alimentation (21) en aval d'au moins une partie dudit échangeur de chaleur régénératif (44) pour être détendue dans ladite turbine (33), tandis qu'une deuxième partie dudit débit du premier ergol liquide est injectée dans la chambre propulsive (40).

## Patentansprüche

1. Antriebsanordnung (10), umfassend mindestens:
einen ersten Behälter (11), der geeignet ist, einen ersten Flüssigtreibstoff zu enthalten,
einen zweiten Behälter (12), der geeignet ist, einen zweiten Flüssigtreibstoff zu enthalten,
eine Druckbeaufschlagungsvorrichtung (60), die dazu ausgestaltet ist, einen Druck in dem zweiten Behälter (12) im Wesentlichen höher zu halten als in dem ersten Behälter (11),
eine Schubkammer (40), die geeignet ist, einen Schub durch die Verbrennung und die Ausdehnung eines Gemischs der Treibstoffe zu erzeugen,
einen ersten Versorgungskreislauf (21), die den ersten Behälter (11) mit der Schubkammer (40) verbindet, um Letztere mit dem ersten Treibstoff zu versorgen, und umfassend einen regenerativen Wärmetauscher (44), der angeordnet ist, um den ersten Treibstoff mit der Wärme zu erwärmen, die aus der Schubkammer(40) stammt,
einen zweiten Versorgungskreislauf (22), die den zweiten Behälter (12) mit der Schubkammer (40) verbindet, um Letztere mit dem zweiten Treibstoff zu versorgen, und
eine einwellige Turbopumpe (30), umfassend eine Turbine (33), eine erste Pumpe (31) und eine zweite Pumpe (32), wobei die Pumpen (31, 32) für ihre Betätigung durch eine einzige Drehwelle (34) mit der Turbine (33) mechanisch verbunden sind, wobei der erste Versorgungskreislauf (21) vor dem regenerativen Wärmetauscher (44) durch die erste Pumpe (31) verläuft, wobei der zweite Versorgungskreislauf (22) durch die zweite Pumpe (32) verläuft, und wobei der erste Versorgungskreislauf (21) stromabwärts von regenerativen Wärmetauscher (44) durch die Turbine (33) verläuft.

2. Antriebsanordnung (10) nach dem ersten Anspruch, wobei der erste Versorgungskreislauf (21) zwischen dem regenerativen Wärmetauscher (44) und der Schubkammer (40) durch die Turbine (33) verläuft.

3. Antriebsanordnung (10) nach dem ersten Anspruch, wobei ein Abzweigarm (21b) des erste Versorgungskreislaufs(21) stromabwärts von mindestens einem Teil des regenerativen Wärmetauschers (44) durch die Turbine (33) verläuft, wobei der Abzweigarm (21b) nicht in die Schubkammer (40) mündet.

4. Antriebsanordnung (10) nach einem der vorhergehenden Ansprüche, wobei der erste Behälter (11) geeignet ist, einen Innendruck von mindestens 2 MPa, und insbesondere mindestens 3 MPa, zu halten.

5. Antriebsanordnung (10) nach einem der vorhergehenden Ansprüche, wobei die Turbine (33) zwischen der ersten Pumpe (31) und der zweiten Pumpe (32) platziert ist.

6. Antriebsanordnung (10) nach Anspruch 5, wobei die erste Pumpe (31) und die zweite Pumpe (32) in Bezug auf Lager (35, 36), welche die Drehwelle (34) stützen, auskragend platziert sind.

7. Antriebsanordnung (10) nach einem der vorhergehenden Ansprüche, wobei die Turbine (33) eine Axialturbine ist.

8. Antriebsanordnung (10) nach einem der vorhergehenden Ansprüche, wobei die erste Pumpe (31) eine Zentrifugalpumpe ist und die zweite Pumpe (32) eine Axialpumpe ist.

9. Antriebsanordnung (10) nach einem der vorhergehenden Ansprüche, wobei der zweite Behälter (12) zumindest teilweise aus Verbundmaterial besteht.

10. Antriebsanordnung (10) nach Anspruch 9, wobei der zweite Behälter (12) eine gewickelte Verbundstruktur umfasst.

11. Antriebsanordnung (10) nach einem der vorhergehenden Ansprüche, wobei mindestens einer der Flüssigtreibstoffe ein kryogener Treibstoff ist.

12. Antriebsanordnung (10) nach Anspruch 11, wobei der erste Flüssigtreibstoff flüssiger Wasserstoff ist.

13. Antriebsanordnung (10) nach einem der Ansprüche 11 oder 12, wobei der zweite Flüssigtreibstoff flüssiger Sauerstoff ist.

14. Raumfahrzeug (1), umfassend eine Antriebsanordnung (10) nach einem der vorhergehenden Ansprüche.

15. Verfahren zur Versorgung einer Schubkammer (40) einer Antriebsanordnung mit Flüssigtreibstoff, wobei:
eine Menge eines ersten Flüssigtreibstoffs aus einem ersten Behälter (11) über einen ersten Versorgungskreislauf (21) extrahiert wird, wobei er zunächst durch eine erste Pumpe (31) einer einwelligen Turbopumpe (30) gepumpt wird, in einem regenerativen Wärmetauscher (44) mit der Wärme erwärmt wird, die aus der Schubkammer (40) stammt, und sich anschließend in einer Turbine (33) der einwelligen Turbopumpe (30) ausdehnt, um die erste Pumpe (31) und eine zweite Pumpe (32) der einwelligen Turbopumpe (30) über eine einzige Drehwelle (34) zu betätigen, welche die Turbine (33) mit den beiden Pumpen (31, 32) der einwelligen Turbopumpe (30) verbindet,
eine Menge eines zweiten Flüssigtreibstoffs aus einem zweiten Behälter (12) extrahiert wird, wobei der zweite Flüssigtreibstoff durch eine Druckbeaufschlagungsvorrichtung (60) bei einem Druck gehalten wird, der im Wesentlichen höher ist als der des ersten Flüssigtreibstoffs in dem ersten Behälter (11), und einen ersten Versorgungskreislauf (22) durchquert, in die er durch die zweite Pumpe (32) gepumpt wird, bevor er in die Schubkammer (40) eingespritzt wird.

16. Verfahren zur Versorgung nach Anspruch 15, wobei der erste Flüssigtreibstoff nach seiner teilweisen Ausdehnung in der Turbine (33) in die Brennkammer (40) eingespritzt wird.

17. Verfahren zur Versorgung nach Anspruch 15, wobei ein erster Teil der Menge des ersten Flüssigtreibstoffs über einen Abzweigarm (21b) des erste Versorgungskreislaufs (21) stromabwärts von mindestens einem Teil des regenerativen Wärmetauschers (44) abgezweigt wird, um sich in der Turbine (33) auszudehnen, während ein zweiter Teil der Menge des ersten Flüssigtreibstoffs in die Schubkammer (40) eingespritzt wird.

## Claims

1. A propulsion assembly (10) comprising at least:
a first tank (11) suitable for containing a first liquid propellant;
a second tank (12) suitable for containing a second liquid propellant;
a pressurizer device (60) configured to maintain a substantially higher pressure in the second tank (12) than in the first tank (11);
a propulsion chamber (40) suitable for generating thrust by combustion and expansion of a mixture of said propellant;
a first feed circuit (21) connecting the first tank (11) to the propulsion chamber (40) in order to feed the latter with the first propellant, and including a regenerative heat exchanger (44) arranged to heat said first propellant with heat coming from the propulsion chamber (40);
a second feed circuit (22) connecting the second tank (12) to the propulsion chamber (40) in order to feed the latter with the second propellant; and
a single-shaft turbopump (30) comprising a turbine (33), a first pump (31), and a second pump (32), said pumps (31, 32) being mechanically connected to said turbine (33) for actuation by a single rotary shaft (34), said first pump (31) having the first feed circuit (21) pass therethrough upstream from said regenerative heat exchanger (44), said second pump (32) having the second feed circuit (22) pass therethrough, and said turbine (33) having the first feed circuit (21) pass therethrough downstream from said regenerative heat exchanger (44).

2. A propulsion assembly (10) according to the first claim, wherein said turbine (33) has the first feed circuit (31) pass therethrough between said regenerative heat exchanger (44) and said propulsion chamber (40).

3. A propulsion assembly (10) according to the first claim, wherein said turbine (33) has a branch connection (21b) of the first feed circuit (21) pass therethrough downstream from at least a portion of said regenerative heat exchanger (44), said branch connection (21b) not leading to the propulsion chamber (40).

4. A propulsion assembly (10) according to any preceding claim, wherein the first tank (11) is suitable for maintaining an internal pressure of at least 2 MPa, and in particular of at least 3 MPa.

5. A propulsion assembly (10) according to any preceding claim, wherein the turbine (33) is placed between the first pump (31) and the second pump (32).

6. A propulsion assembly (10) according to claim 5, wherein the first pump (31) and the second pump (32) are cantilevered out relative to bearings (35, 36) supporting the rotary shaft (34).

7. A propulsion assembly (10) according to any preceding claim, wherein said turbine (33) is an axial turbine.

8. A propulsion assembly (10) according to any preceding claim, wherein the first pump (31) is a centrifugal pump and the second pump (32) is an axial pump.

9. A propulsion assembly (10) according to any preceding claim, wherein said second tank (12) is made at least in part out of composite material.

10. A propulsion assembly (10) according to claim 9, wherein said second tank (12) comprises a wound composite structure.

11. A propulsion assembly (10) according to any preceding claim, wherein at least one of said liquid propellants is a cryogenic propellant.

12. A propulsion assembly (10) according to claim 11, wherein said first liquid propellant is liquid hydrogen.

13. A propulsion assembly (10) according to claim 11 or claim 12, wherein said second liquid propellant is liquid oxygen.

14. A space vehicle (1) including a propulsion assembly (10) according to any preceding claim.

15. A feed method for feeding liquid propellants from a propulsion chamber (40) of a propulsion assembly, wherein:
a flow of a first liquid propellant is extracted from a first tank (11) via a first feed circuit (21), in which the flow is initially pumped by a first pump (31) of a single-shaft turbopump (30), heated in a regenerative heat exchanger (44) with heat coming from the propulsion chamber (40), and is then expanded in a turbine (33) of said single-shaft turbopump (30) in order to drive said first pump (31) and a second pump (32) of the single-shaft turbopump (30) via a single rotary shaft (34) connecting the turbine (33) to both pumps (31, 32) of the single-shaft turbopump (30); and
a flow of a second liquid propellant is extracted from a second tank (12) in which the second liquid propellant is maintained by a pressurizer device (60) at a pressure that is substantially higher than the pressure of the first liquid propellant in the first tank (11), which flow passes via a second feed circuit (22) in which it is pumped by said second pump (32) prior to being injected into the propulsion chamber (40).

16. A feed method according to claim 15, wherein the first liquid propellant is injected into the propulsion chamber (40) after partial expansion in the turbine (33).

17. A feed method according to claim 15, wherein a first portion of said flow of the first liquid propellant is taken off via a branch connection (21b) of the first feed circuit (21) downstream from at least a portion of said regenerative heat exchanger (44) in order to be expanded in said turbine (33), while a second portion of said flow of the first liquid propellant is injected into the propulsion chamber (40).
